# EUROPEAN PATENT SPECIFICATION

(11) **EP 3 609 014 B1**
(45) Date of publication and mention of the grant of the patent: **03.04.2024**
(21) Application number: 17904338.5
(22) Date of filing: 15.12.2017
(51) Int. Cl.: H01M 10/058, H01M 10/0525, H01M 50/414, H01M 50/44, H01M 50/46, H01M 50/491, H01M 4/04, H01M 4/13, H01M 4/02

(54) **ELECTRODE STRUCTURE AND SECONDARY BATTERY**
ELEKTRODENSTRUKTUR UND SEKUNDÄRBATTERIE
STRUCTURE D'ÉLECTRODE ET BATTERIE RECHARGEABLE

(30) Priority: 28.03.2017 JP 2017062103
(43) Date of publication of application: 12.02.2020
(73) Proprietor: Kabushiki Kaisha Toshiba, Minato-ku Tokyo 105-8001 (JP)
(72) Inventor: YORISAKI, Toma, Tokyo 105-8001 (JP); TOKUNO, Yoko, Tokyo 105-8001 (JP); NAKA, Tomomichi, Tokyo 105-8001 (JP); UEMATSU, Ikuo, Tokyo 105-8001 (JP)
(74) Representative: Hoffmann Eitle
(86) International application number: PCT/JP2017/045179
(87) International publication number: WO 2018/179613

(56) References cited:
- EP-A1- 2 889 933
- WO-A1-2014/196177
- WO-A1-2016/163404
- JP-A- H0 233 861
- JP-A- 2010 010 093
- US-A1- 2011 206 962
- US-A1- 2011 318 631

## Description

### FIELD

Embodiments of the present invention relate to an electrode structure and a secondary battery.

### BACKGROUND

In secondary batteries such as lithium ion secondary batteries, a porous separator is used to avoid a contact between a positive electrode and a negative electrode. Usually, a separator is prepared as a self-supporting film separately from electrode bodies (positive electrode and negative electrode). The separator is disposed between the positive electrode and the negative electrode to form an electrode group, and this is wound or stacked to constitute a battery.

Examples of general separators include a porous film formed of a polyolefin-based resin film. Such a separator is manufactured, for example, by extrusion-molding a molten material containing a polyolefin-based resin composition into a sheet shape, extracting and removing substances other than the polyolefin-based resin, and then stretching the sheet.

However, since it is necessary for a separator made of a resin film to have mechanical strength so as not to break during production of a battery, it is difficult to make the separator thin beyond a certain extent. Hence, particularly in a battery in which large numbers of positive electrodes and negative electrodes are stacked or wound, the quantity of unit battery layers that can be accommodated per unit volume of battery is limited due to the thickness of the separator. This leads to a decrease in battery capacity. In addition, the rapid migration of lithium ions between the electrodes is inhibited due to the thickness and density of the separator, and this leads to a decrease in the input and output performance of the battery.

In order to cope with this, it has been proposed to use a deposit of organic fibers as a separator instead of a separator formed of a resin film. Patent literature 2 discloses a secondary battery comprising a separator including an organic fiber layer.

### CITATION LIST

### PATENT LITERATURE

Patent Literature 1: Jpn. Pat. Appln. KOKAI Publication No. 2014-167938
Patent Literature 2: Europ. Pat. Appln. 2 889 933 A1

### SUMMARY

### TECHNICAL PROBLEM

The problem to be solved by the present invention is to provide an electrode structure and a secondary battery which can suppress the occurrence of internal short circuit.

### SOLUTION TO PROBLEM

The scope of the present invention is defined by the appended claims.

According to one embodiment, an electrode structure is provided. The electrode structure includes an electrode and a separator. The electrode includes a current collector and an active material-containing layer supported on at least one surface of the current collector. A surface of the active material-containing layer comprises a first region having a roughness higher than an arithmetic mean surface roughness Ra of the active material-containing layer and a second region having a roughness of ≤ the arithmetic mean surface roughness Ra of the active material-containing layer. The active material-containing layer is a negative electrode active material-containing layer or a positive active material-containing layer. The arithmetic mean surface roughness Ra of the negative active material-containing layer is in a range of 0.01 um or more and 0.5 um or less and the arithmetic mean surface roughness Ra of the positive active material-containing layer is in a range of 0.01 um or more and 1 um or less as attained by a method prescribed in Japanese Industrial Standard JIS B 0601: 2013. The separator includes an organic fiber layer. The organic fiber layer includes an organic fiber having an aspect ratio (V1/H1) in a cross section intersecting with the length direction of the organic fiber of ≤ 0.97, wherein V1 is the length parallel to the thickness direction of the active material-containing layer, and H1 is the length horizontal to an in-plane direction thereof, and being in contact with the first region in the cross section. The organic fiber layer also includes an organic fiber having an aspect ratio (V2/H2) of ≥ the aspect ratio (V1/H1) in a cross section intersecting with the length direction of the organic fiber, wherein V2 is the length parallel to the thickness direction of the active material-containing layer, and H2 is the length horizontal to an in-plane direction thereof, and being in contact with the second region in the cross section. The organic fiber having the aspect ratio (V1/H1) and the organic fiber having the aspect ratio (V2/H2) are one organic fiber or separate organic fibers. The organic fiber has a length of 1 mm or more and an average diameter of 2 um or less as measured through observation using a FIB apparatus. The aspect ratios V1/H1 and V2/H2 are obtained as described herein.

According to another embodiment, a secondary battery is provided. The secondary battery includes a positive electrode, a negative electrode, and a separator. The positive electrode and the negative electrode each include a current collector and an active material-containing layer supported on at least one surface of the current collector. A surface of the active material-containing layer comprises a first region having a roughness higher than an arithmetic mean surface roughness Ra of the active material-containing layer and a second region having a roughness of ≤ the arithmetic mean surface roughness Ra of the active material-containing layer. The active material-containing layer is a negative electrode active material-containing layer or a positive active material-containing layer. The arithmetic mean surface roughness Ra of the negative active material-containing layer is in a range of 0.01 um or more and 0.5 um or less and the arithmetic mean surface roughness Ra of the positive active material-containing layer is in a range of 0.01 um or more and 1 um or less as attained by a method prescribed in Japanese Industrial Standard JIS B 0601: 2013. The separator includes an organic fiber layer. The organic fiber layer faces the active material-containing layer of at least either of the positive electrode or the negative electrode. The organic fiber layer includes an organic fiber having an aspect ratio (V1/H1) in a cross section intersecting with the length direction of the organic fiber of ≤ 0.97, wherein V1 is the length parallel to the thickness direction of the active material-containing layer, and H1 is the length horizontal to an in-plane direction thereof, and being in contact with the first region in the cross section. The organic fiber layer also includes an organic fiber having an aspect ratio (V2/H2) of ≥ the aspect ratio (V1/H1) in a cross section intersecting with the length direction of the organic fiber, wherein V2 is the length parallel to the thickness direction of the active material-containing layer, and H2 is the length horizontal to an in-plane direction thereof, and being in contact with the second region in the cross section. The organic fiber having the aspect ratio (V1/H1) and the organic fiber having the aspect ratio (V2/H2) are one organic fiber or separate organic fibers. The organic fiber has a length of 1 mm or more and an average diameter of 2 um or less as measured through observation using a FIB apparatus. The aspect ratios V1/H1 and V2/H2 are obtained as described herein.

### BRIEF DESCRIPTION OF THE DRAWINGS

FIG. 1 is a cross-sectional view schematically illustrating an example of an electrode group of the secondary battery according to an embodiment;
FIG. 2 is an enlarged cross-sectional view of the separator and negative electrode illustrated in FIG. 1;
FIG. 3 is a top view schematically illustrating a measurement sample;
FIG. 4 is a cross-sectional view schematically illustrating the measurement sample illustrated in FIG. 3;
FIG. 5 is a cross-sectional view schematically illustrating a measurement sample after the preparation of observation surface;
FIG. 6 is a cross-sectional view schematically illustrating a situation in which a SIM image of the observation surface is taken;
FIG. 7 is a view schematically illustrating an example of a SIM image for the cross section of the negative electrode;
FIG. 8 is a diagram illustrating the arithmetic mean surface roughness Ra;
FIG. 9 is a cross-sectional view an example of a first modification of the deposit;
FIG. 10 is a cross-sectional view an example of a second modification of the deposit;
FIG. 11 is a cross-sectional view illustrating another example of the electrode group;
FIG. 12 is a cross-sectional view illustrating still another example of the electrode group;
FIG. 13 is a top view schematically illustrating an example of the measurement sample;
FIG. 14 is a view schematically illustrating a SIM image after scale correction attained for the measurement sample illustrated in FIG. 13;
FIG. 15 is a view illustrating an image attained by performing a treatment of approximating the SIM image illustrated in FIG. 14 to an ellipse;
FIG. 16 is a top view schematically illustrating another example of the measurement sample;
FIG. 17 is a view schematically illustrating a SIM image after scale correction attained for the measurement sample illustrated in FIG. 16;
FIG. 18 is a cross-sectional view illustrating an example of the electrode structure according to an embodiment;
FIG. 19 is an exploded perspective view illustrating an example of a secondary battery according to an embodiment;
FIG. 20 is a partial notch perspective view illustrating another example of the secondary battery according to an embodiment;
FIG. 21 is a graph illustrating a charge curve attained for the battery according to Example 1;
FIG. 22 is a graph illustrating a discharge curve attained for the battery according to Example 1.

### DETAILED DESCRIPTION

A separator including a deposit of organic fiber is formed, for example, by depositing one string-shaped organic fiber on an active material-containing layer supported on a current collector. The transverse section of the organic fiber is a circular shape, and the diameter thereof is approximately constant along the length direction of the fiber. Hence, the shape of the cross section perpendicular to the length direction of the organic fiber is circular, and the aspect ratio thereof is approximately 1.00. Here, the aspect ratio means a ratio V/H of a length V parallel to the thickness direction of the active material-containing layer to a length H parallel to the in-plane direction of the active material-containing layer in a cross section perpendicular to the length direction of the organic fiber.

Moreover, since the transverse section of the organic fiber is the circular shape, the contact area with the active material-containing layer is small. For this reason, a deposit of such an organic fiber has a problem of easily peeling off from the active material-containing layer by an external impact.

### [First Embodiment]

A secondary battery according to the first embodiment includes a positive electrode, a negative electrode, and a separator. The positive electrode and the negative electrode each include a current collector and an active material-containing layer supported on at least one surface of the current collector. A surface of the active material-containing layer comprises a first region having a roughness higher than an arithmetic mean surface roughness Ra of the active material-containing layer and a second region having a roughness of ≤ the arithmetic mean surface roughness Ra of the active material-containing layer. The active material-containing layer is a negative electrode active material-containing layer or a positive active material-containing layer. The arithmetic mean surface roughness Ra of the negative active material-containing layer is in a range of 0.01 um or more and 0.5 um or less and the arithmetic mean surface roughness Ra of the positive active material-containing layer is in a range of 0.01 um or more and 1 um or less as attained by a method prescribed in Japanese Industrial Standard JIS B 0601: 2013. The separator includes an organic fiber layer. The organic fiber layer faces the active material-containing layer of at least either of the positive electrode or the negative electrode. The organic fiber layer includes an organic fiber having an aspect ratio (V1/H1) in a cross section intersecting with the length direction of the organic fiber of ≤ 0.97, wherein V1 is the length parallel to the thickness direction of the active material-containing layer, and H1 is the length horizontal to an in-plane direction thereof, and being in contact with the first region in the cross section. The organic fiber layer also includes an organic fiber having an aspect ratio (V2/H2) of ≥ the aspect ratio (V1/H1) in a cross section intersecting with the length direction of the organic fiber, wherein V2 is the length parallel to the thickness direction of the active material-containing layer, and H2 is the length horizontal to an in-plane direction thereof, and being in contact with the second region in the cross section. The organic fiber having the aspect ratio (V1/H1) and the organic fiber having the aspect ratio (V2/H2) are one organic fiber or separate organic fibers. The organic fiber has a length of 1 mm or more and an average diameter of 2 um or less as measured through observation using a FIB apparatus. The aspect ratios V1/H1 and V2/H2 are obtained as described herein.

The organic fiber layer of a secondary battery according to an embodiment includes an organic fiber of which the cross section perpendicular to the length direction has a shape having a relatively low aspect ratio. Moreover, this organic fiber is in contact with the active material-containing layer. An organic fiber having a low aspect ratio has a larger contact area with the active material-containing layer as compared with an organic fiber having a high aspect ratio. For this reason, an organic fiber having a low aspect ratio is less likely to peel off from the active material-containing layer even if the organic fiber is subjected to vibration or an external impact as compared with an organic fiber having a high aspect ratio. Hence, it is possible to diminish the occurrence of internal short circuit due to contact between the positive electrode and the negative electrode by using, as a separator, a layer including an organic fiber having a low aspect ratio.

Hereinafter, the secondary battery according to an embodiment will be described in detail with reference to the drawings.

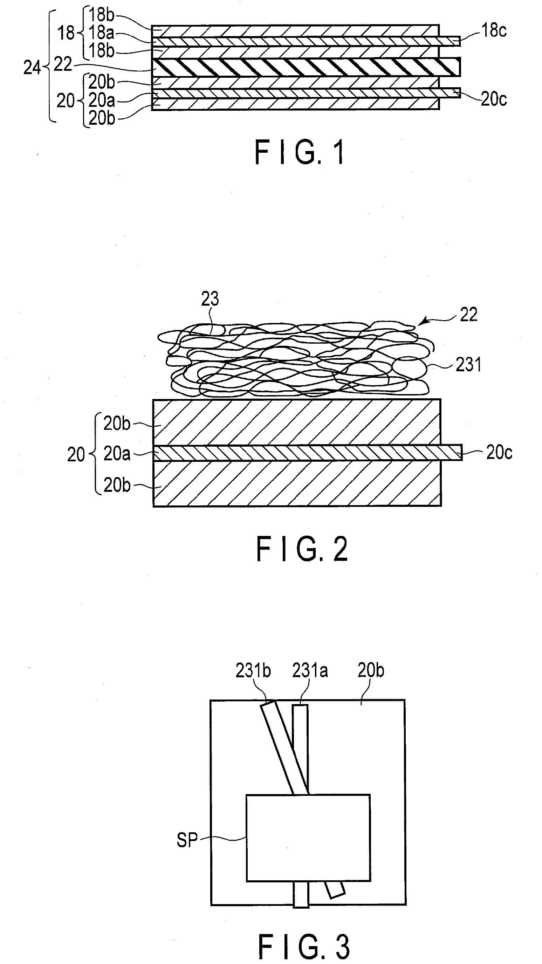

FIG. 1 is a cross-sectional view schematically illustrating an example of an electrode group of the secondary battery according to an embodiment. The secondary battery illustrated in FIG. 1 includes an electrode group 24. The electrode group 24 includes a positive electrode 18, a negative electrode 20, and a separator 22. The positive electrode 18 and the negative electrode 20 face each other with the separator 22 interposed therebetween.

The positive electrode 18 includes a positive electrode current collector 18a, a positive electrode active material-containing layer (hereinafter referred to as a positive electrode layer) 18b, and a positive electrode tab 18c. The positive electrode layer 18b is provided on both surfaces of the positive electrode current collector 18a. The positive electrode tab 18c is a portion of the positive electrode current collector 18a, the portion being not provided with the positive electrode layer 18b and protruding from one side of the positive electrode layer 18b.

The negative electrode 20 includes a negative electrode current collector 20a, a negative electrode active material-containing layer (hereinafter referred to as a negative electrode layer) 20b, and a negative electrode tab 20c. The negative electrode layer 20b is provided on both surfaces of the negative electrode current collector 20a. The negative electrode tab 20c is a portion of the negative electrode current collector 20a, the portion being not provided with the negative electrode layer 20b and protruding from one side of the negative electrode layer 20b.

FIG. 2 is an enlarged cross-sectional view of the separator and negative electrode illustrated in FIG. 1. The separator 22 includes a deposit 23. The deposit 23 includes an organic fiber 231. The deposit 23 is provided on the surface of the negative electrode layer 20b.

### (1) Negative electrode current collector and tab

Example of the negative electrode current collector 20a include a foil formed of a conductive material. Examples of the conductive material include aluminum or an aluminum alloy.

It is desirable that the negative electrode tab 20c is formed of the same material as that for the negative electrode current collector 20a. The negative electrode tab 20c may be provided by preparing a metal foil separately from the negative electrode current collector 20a and connecting this metal foil to the negative electrode current collector 20a by welding and the like.

### (2) Negative electrode active material-containing layer

The negative electrode active material-containing layer (negative electrode layer) 20b may be formed on both surfaces of the negative electrode current collector 20a but can be formed only on one surface.

The surface of the negative electrode layer 20b has fine concave portions and convex portions. This is because the negative electrode layer 20b contains a particulate negative electrode active material as a main component. The details of the negative electrode active material will be described later. The arithmetic mean surface roughness Ra of the negative electrode layer 20b is in a range of 0.01 um or more and 0.5 um or less.

This arithmetic mean surface roughness Ra can be attained by the method prescribed in Japanese Industrial Standard JIS B 0601: 2013. The details of this method will be described with reference to FIGS. 3 to 8.

First, the secondary battery is disassembled in an argon gas atmosphere to take out the electrode therefrom. Subsequently, this electrode is washed with a solvent such as ethyl methyl carbonate to remove the electrolyte from the electrode. Subsequently, the electrode is then dried. A sample is thus obtained.

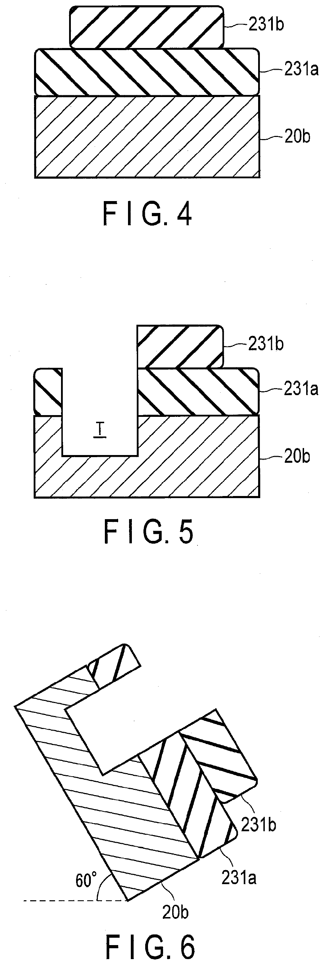

FIG. 3 is a top view schematically illustrating a measurement sample. FIG. 4 is a cross-sectional view schematically illustrating the measurement sample illustrated in FIG. 3. In this sample, a plurality of, for example, two organic fibers 231a and 231b are deposited on the negative electrode layer 20b. The organic fiber 231a is in contact with the negative electrode layer 20b in a measurement region SP. The organic fiber 231b is superimposed on the negative electrode layer 20b in the measurement region SP.

Subsequently, a part of this sample is provided with a groove T as illustrated in FIG. 5 using a focused ion beam (FIB) apparatus. FIG. 5 is a cross-sectional view schematically illustrating a measurement sample after the preparation of observation surface. Specifically, a part of the measurement region SP illustrated in FIG. 3 is irradiated with a focused ion beam to form the groove T reaching the negative electrode layer 20b. A cross section including the interface between the organic fiber 231a and the negative electrode layer 20b is thus formed on the sample.

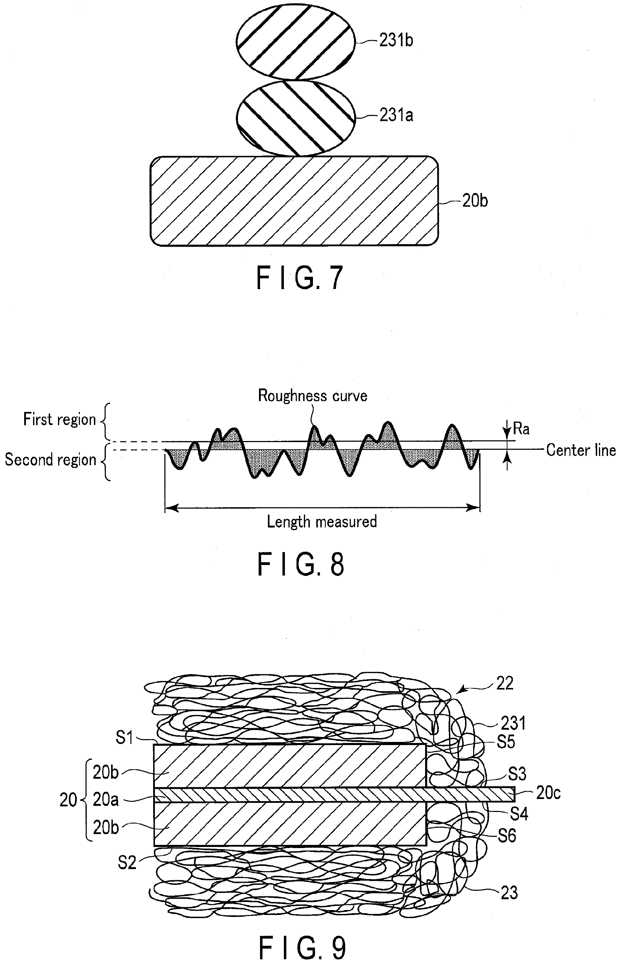

Subsequently, this sample is tilted at an angle of, for example, 60° and a scanning ion microscopic (SIM) image of the above cross section is attained from diagonally above as illustrated in FIG. 6. FIG. 6 is a cross-sectional view schematically illustrating a situation in which a SIM image of the observation surface is taken. FIG. 7 is a view schematically illustrating an example of a SIM image for the cross section of the negative electrode.

Subsequently, scale correction of this SIM image is performed. The scale correction is performed so that this image is taken from a position right in front. The cross-sectional curve is extracted from the image after the scale correction thus attained and the roughness curve and the center line are calculated in conformity with the method prescribed in Japanese Industrial Standard JIS B 0601: 2013 to attain the arithmetic mean surface roughness Ra of the negative electrode active material-containing layer 20b. FIG. 8 is a diagram illustrating the arithmetic mean surface roughness Ra.

As the negative electrode active material, carbon materials such as graphite, tin-silicon-based alloy materials and the like can be used but lithium titanate is preferably used. In addition, titanium oxides containing other metals such as niobium (Nb) or lithium titanate may also be mentioned as the negative electrode active material. Examples of lithium titanate include Li₄₊ₓTi₅O₁₂ (0 ≤ x ≤ 3) having a spinel structure and Li_{2+y}Ti₃O₇ (0 ≤ y ≤ 3) having a ramsdellite structure. The kind of negative electrode active material can be one kind or two or more kinds.

The average particle diameter of primary particles of the negative electrode active material is preferably in a range of 0.001 um or more and 1 um or less. The average particle diameter can be determined, for example, by observing the negative electrode active material under SEM. The particle shape may be either of a granular shape or a fibrous shape. In the case of a fibrous shape, the fiber diameter is preferably 0.1 um or less. Specifically, the average particle diameter of primary particles of the negative electrode active material can be measured from an image observed under an electron microscope (SEM). The negative electrode layer 20b exhibiting high surface flatness can be obtained in a case where lithium titanate having an average particle diameter of 1 um or less is used as a negative electrode active material. In addition, when lithium titanate is used, the potential of the negative electrode becomes noble as compared with a lithium ion secondary battery using a general carbon negative electrode, and thus the precipitation of lithium metal does not occur in principle. The expansion and contraction of the negative electrode active material containing lithium titanate accompanying the charge and discharge reaction is small and thus collapse of the crystal structure of the active material can be prevented.

The negative electrode layer 20b may contain a binder and a conductive agent in addition to the negative electrode active material. Examples of the conductive agent include acetylene black, carbon black, graphite, or any mixture of these. Examples of the binder for binding the negative electrode active material with the conductive agent include polytetrafluoroethylene (PTFE), polyvinylidene fluoride (PVdF), fluorine-based rubber, styrene-butadiene rubber, or any mixture of these.

### (3) Positive electrode current collector and tab

Examples of the positive electrode current collector 18a include a foil formed of a conductive material. Examples of the conductive material include aluminum or an aluminum alloy.

It is desirable that the positive electrode tab 18c is formed of the same material as that for the positive electrode current collector 18a. As the positive electrode tab 18c, one obtained by preparing a tab separately from the positive electrode current collector 18a and connecting this tab to the positive electrode current collector 18a by welding and the like may be used.

### (4) Positive electrode active material-containing layer

The surface of the positive electrode active material-containing (positive electrode) layer 18b has fine concave portions and convex portions. This is because the positive electrode layer 18b contains a particulate positive electrode active material as a main component. The arithmetic mean surface roughness Ra of the positive electrode layer 18b is in a range of 0.01 um or more and 1 um or less. This arithmetic mean surface roughness Ra can be calculated by the same method as that for the negative electrode layer 20b.

For example, a lithium-transition metal composite oxide can be used as the positive electrode active material. The lithium-transition metal composite oxide is, for example, LiCoO₂, LiNi₁₋ₓCoₓO₂ (0 < x < 0.3), LiMnₓNi_{y}Co_{z}O₂ (0 < x < 0.5, 0 < y < 0.5, 0 ≤ z < 0.5), LiMn₂₋ₓMₓO₄ (M denotes at least one element selected from the group consisting of Mg, Co, Al, and Ni, 0 < x < 0.2), and LiMPO₄ (M denotes at least one element selected from the group consisting of Fe, Co, and Ni).

The positive electrode layer 18b may contain a binder and a conductive agent in addition to the positive electrode active material. As the binder and the conductive agent, the same ones as those described in the negative electrode layer 20b can be used.

### (5) Separator

The separator 22 includes a deposit 23. The deposit 23 may include one continuous organic fiber 231 or a plurality of organic fibers 231. The deposit 23 may have a three-dimensional meshwork in which one organic fiber 231 or a plurality of organic fibers 231 intersect each other in a mesh shape.

FIG. 9 is a cross-sectional view according to a first modification of the deposit. The deposit 23 illustrated in FIG. 9 is provided on the respective main surfaces S1 and S2 of the negative electrode layers 20b provided on both surfaces of the negative electrode current collector 20a. In addition, this deposit 23 is provided on both surfaces S3 and S4 of the negative electrode tab 20c. In addition, this deposit 23 is provided on side surfaces S5 and S6 of the negative electrode layer 20b adjacent to the negative electrode tab 20c. A short circuit between the positive electrode and the negative electrode can be further suppressed when the deposit 23 is provided so as to surround the negative electrode tab 20c and a part of the negative electrode layer 20b in this manner.

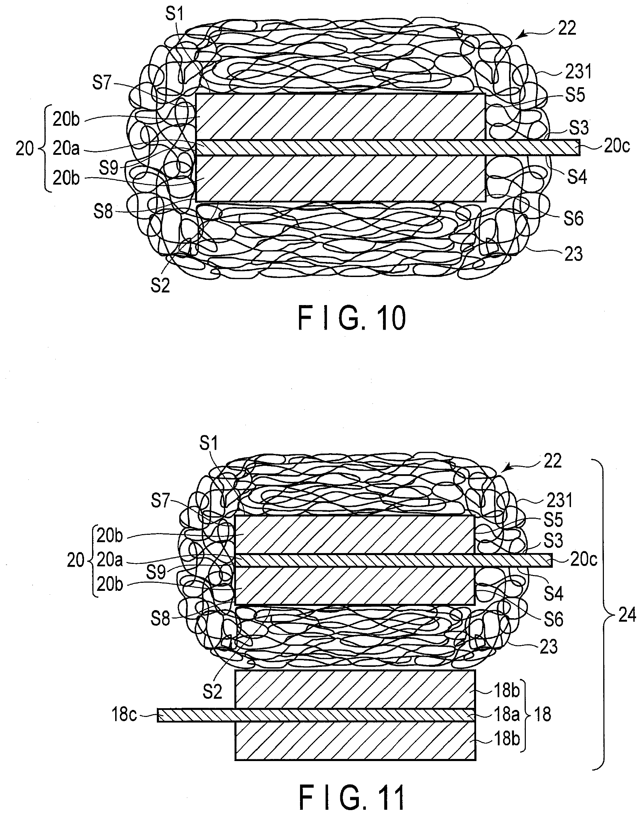

FIG. 10 is a cross-sectional view according to a second modification of the deposit. The deposit 23 illustrated in FIG. 10 has the same configuration as that of the deposit 23 illustrated in FIG. 9 except that the deposit 23 is provided on side surfaces S7 and S8 of the negative electrode layer 20b on the side on which the negative electrode tab 20c is not provided and on a side surface S9 of the negative electrode current collector 20a. A short circuit between the positive electrode and the negative electrode can be further suppressed when the deposit 23 is provided so as to surround the main surface and side surface of the negative electrode layer 20b, the side surface of the negative electrode current collector 20a, and the negative electrode tab 20c in this manner.

FIG. 11 is a cross-sectional view illustrating another example of the electrode group. The electrode group 24 illustrated in FIG. 11 has the structure illustrated in FIG. 10 and includes the positive electrode 18. The positive electrode 18 faces the negative electrode 20 with the deposit 23 interposed therebetween.

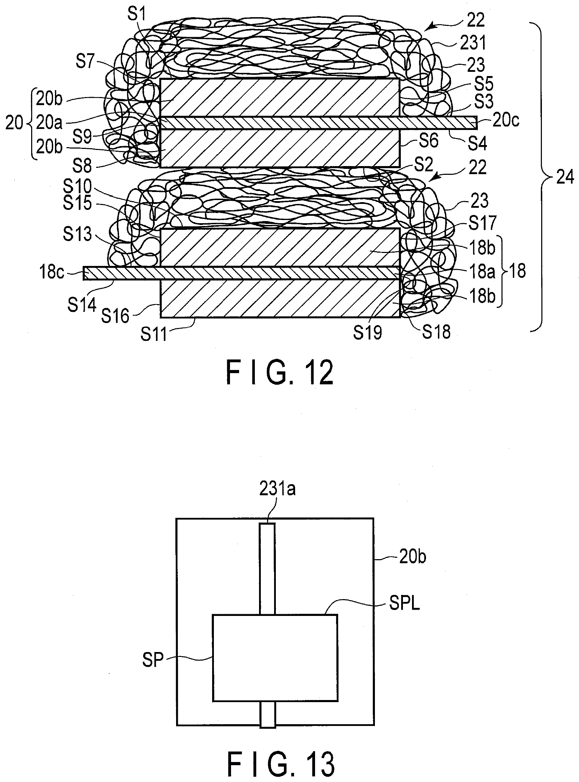

FIG. 12 is a cross-sectional view illustrating still another example of the electrode group. In the electrode group 24 illustrated in FIG. 12, the deposit 23 is provided on the main surface S1 of the negative electrode layer 20b provided on the opposite side of the positive electrode 18 between the negative electrode layers 20b provided on both surfaces of the negative electrode current collector 20a, the side surface S5 on the side provided with the negative electrode tab 20c, and the side surfaces S7 and S8 of the negative electrode layer 20b on the side not provided with the negative electrode tab 20c and on the main surface S3 on the opposite side of the positive electrode 18 between the both surfaces of the negative electrode tab 20c and the side surface S9 of the negative electrode current collector 20a.

In addition, the deposit 23 is provided on a main surface S10 of the positive electrode layer 18b provided on the negative electrode 20 side between the positive electrode layers 18b provided on both surfaces of the positive electrode current collector 18a, a side surface S15 on the side provided with the positive electrode tab 18c, and side surfaces 17 and 18 of the positive electrode layer 18b on the side not provided with the positive electrode tab 18c and on a main surface S13 on the negative electrode 20 side between the both surfaces of the positive electrode tab 18c and a side surface S19 of the positive electrode current collector 18a.

The deposit 23 includes the organic fiber 231 of which the cross section perpendicular to the length direction of the organic fiber 231 has an aspect ratio (V1/H1) of 0.97 or less. The organic fiber 231 having this aspect ratio is in contact with the surface of the active material-containing layer located in a region having a roughness higher than the arithmetic mean surface roughness Ra at least in the cross section. Here, the region having a roughness higher than the arithmetic mean surface roughness Ra of the active material-containing layer is referred to as a first region as illustrated in FIG. 8.

The organic fiber 231 having an aspect ratio of 0.97 or less has a large contact area with the active material-containing layer as compared with the organic fiber 231 having an aspect ratio higher than 0.97. Hence, in a battery using the deposit 23 of such an organic fiber 231 as the separator 22, the organic fiber 231 is less likely to peel off from the active material-containing layer even if the organic fiber 231 is subjected to an external impact. Hence, in a battery using the deposit 23 of such an organic fiber 231 as the separator 22, it is possible to diminish the occurrence of the internal short circuit due to the contact between the positive electrode and the negative electrode.

This ratio V1/H1 is preferably 0.85 or less, more preferably 0.8 or less, and still more preferably 0.65 or less. The lower limit value of this ratio V1/H1 is not particularly limited but is 0.2 or more according to one example and is 0.3 or more according to another example.

In addition, the deposit 23 may include the organic fiber 231 in contact with the surface of the active material-containing layer located in a region having a roughness equal to or less than the arithmetic mean surface roughness Ra of the active material-containing layer. Here, the region having a roughness equal to or less than the arithmetic mean surface roughness Ra of the active material-containing layer is referred to as a second region as illustrated in FIG. 8. In other words, the second region is a portion of the surface of the active material-containing layer excluding the first region. The aspect ratio (V2/H2) of the cross section perpendicular to the length direction of the organic fiber of this organic fiber 231 is equal to or more than the ratio V1/H1. Here, this aspect ratio (V2/H2) is the ratio of a length V2 parallel to the thickness direction of the active material-containing layer to a length H2 horizontal to the in-plane direction of the active material-containing layer.

In other words, the penetration of the electrolyte into the active material-containing layer is less likely to be hindered as well as the contact area between the active material-containing layer and the organic fiber 231 is sufficiently large when the value of the ratio V2/H2 of the organic fibers 231 located in the second region is equal to or more than the value of the ratio V1/H1 of the organic fibers 231 located in the first region in at least a part of the organic fibers 231 in contact with the active material-containing layer. Hence, the cycle characteristics can be enhanced as well as the short circuit of secondary battery is suppressed when a separator employing such a configuration is used.

The ratio V2/H2 is preferably 1 or less, more preferably 1.00 or less, and still more preferably 0.97 or less. The contact area between the active material-containing layer and the organic fiber 231 is large and a short circuit of battery tends not to occur when the ratio V2/H2 is low. The lower limit value of this ratio V2/H2 is not particularly limited but is 0.2 or more according to an example and 0.3 or more according to another example.

Incidentally, one organic fiber 231 may include a portion satisfying the aspect ratio (V1/H1) described above and a portion satisfying the aspect ratio (V2/H2) described above. In other words, one organic fiber 231 is in contact with both the surface of the first region and the surface of the second region on the surface of the active material-containing layer in some cases. In this case, the cross section of a portion in contact with the surface of the first region of the organic fiber 231 may satisfy the aspect ratio (V1/H1) described above and the cross section of a portion in contact with the surface of the second region of the organic fiber 231 may satisfy the aspect ratio (V2/H2) described above.

This aspect ratio can be attained by the following method.

First, a SIM image after scale correction is acquired by the same method as that described in the arithmetic mean surface roughness Ra of the negative electrode active material-containing layer 20b. Here, a measurement method using a measurement sample illustrated in FIG. 13 will be described as an example. FIG. 13 is a top view schematically illustrating an example of the measurement sample. In the measurement sample illustrated in FIG. 13, the organic fiber 231a perpendicularly intersects with a long side SPL of the measurement region SP.

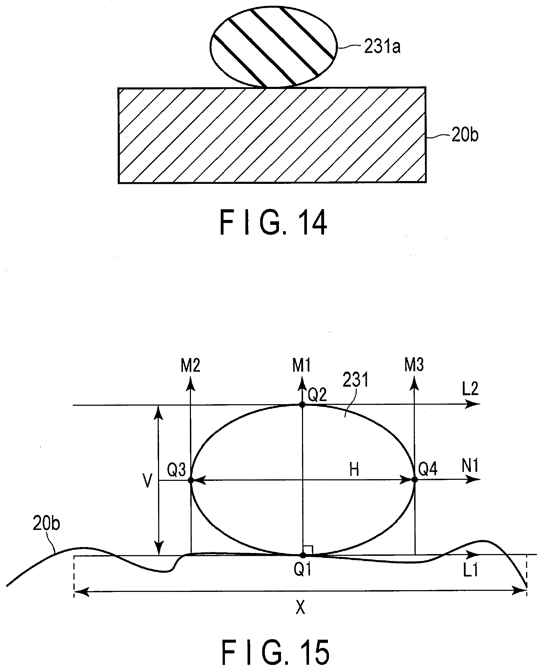

FIG. 14 is a view schematically illustrating a SIM image after scale correction attained for the measurement sample illustrated in FIG. 13. In FIG. 14, the cross section of the organic fiber 231a is located in the first region of the negative electrode layer 20b.

Next, the cross section of the organic fiber 231a illustrated in FIG. 14 is approximated to an ellipse. In this approximation, the ratio of the major axis to the minor axis of the ellipse is set so that the difference between the contour of the cross section of the organic fiber 231 and the contour of the circumference of the ellipse is minimized. FIG. 15 is a view illustrating an image attained by performing a treatment of approximating the SIM image illustrated in FIG. 14 to an ellipse. In FIG. 15, the cross section of the organic fiber 231 is in contact with the surface of the negative electrode layer 20b at a point Q1.

Next, the inclination of the surface of the negative electrode layer 20b in a width X is calculated by linear approximation. The length of the width X is desirably sufficiently long with respect to the thickness of the negative electrode 20 and is set to, for example, 1 mm. Subsequently, a straight line L1 which is parallel to this inclination and passes through the point Q1 is attained. Subsequently, a straight line L2 which is parallel to the straight line L1 and in contact with the contour of the ellipse is attained. A point Q2 is a contact point between the contour of the cross section of the organic fiber 231 and the straight line L2. Subsequently, a straight line M1 which passes through the contact point Q1 and the contact point Q2 and perpendicularly intersects the straight lines L1 and L2 is attained. In this straight line M1, the distance between the contact point Q1 and the contact point Q2 is denoted as a length V parallel to the thickness direction of the active material-containing layer of the organic fiber 231.

Subsequently, straight lines M2 and M3 which are parallel to this straight line M1 and in contact with the contour of the ellipse are attained. A point Q3 and a point Q4 are contact points between the contour of the cross section of the organic fiber 231 and the straight line M2 and the straight line M3, respectively. Subsequently, a straight line N1 which passes the contact point Q3 and the contact point Q4 and perpendicularly intersects the straight lines M1, M2, and M3 is attained. Subsequently, in this straight line N1, the distance between the contact point Q3 and the contact point Q4 is denoted as a length H horizontal to the in-plane direction of the active material-containing layer of the organic fiber 231. The ratio V/H of the length V parallel to the thickness direction of the active material-containing layer of the organic fiber 231 and the length H horizontal to the in-plane direction of the active material-containing layer of the organic fiber 231 is thus attained. Subsequently, this series of operations is performed at three or more different positions on the negative electrode active material-containing layer 20b, and the arithmetic mean value of the ratios V/H is adopted as the aspect ratio V1/H1 of the organic fiber 231.

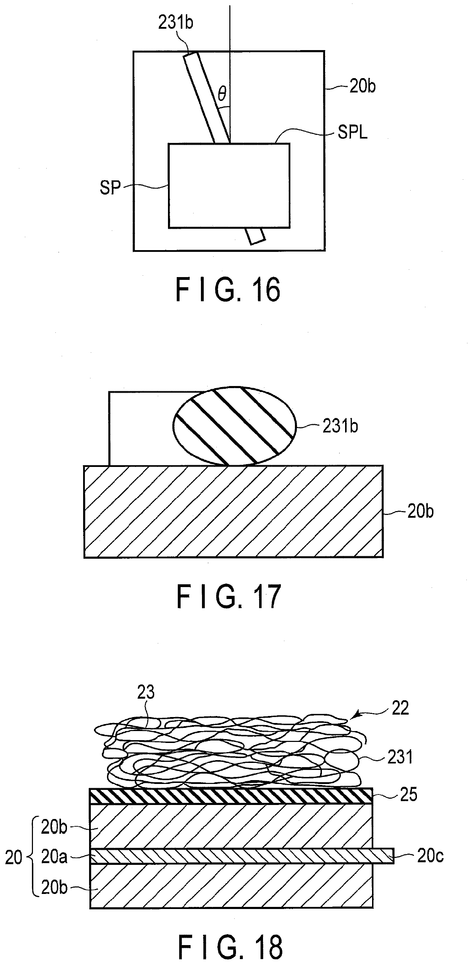

Incidentally, the organic fiber 231a which perpendicularly intersects with the long side SPL of the measurement region SP is described here as an example, but the ratio V/H of the organic fiber 231b which diagonally intersects with the long side SPL of the measurement region SP may be measured. FIG. 16 is a top view schematically illustrating another example of the measurement sample. In the measurement sample illustrated in FIG. 16, the organic fiber 231b diagonally intersects with the long side SPL of the measurement region SP. The inclination angle of the organic fiber 231b is θ. FIG. 17 is a view schematically illustrating a SIM image after scale correction attained for the measurement sample illustrated in FIG. 16. The image illustrated in FIG. 17 can be regarded as an image attained for an organic fiber perpendicularly intersecting with the long side SPL of the measurement region SP by performing transverse scale correction of the image according to the inclination angle.

In addition, the proportion of the area of the portion in contact with the organic fiber 231 in the surface area of the active material-containing layer, namely, the contact area ratio is preferably 1% or more. When the contact area ratio is high, the adhesive property between the active material-containing layer and the organic fiber 231 is high, and thus the deposit 23 tends to hardly peel off from the active material-containing layer. This contact area ratio can be determined from the cross-sectional SIM image of the organic fiber after scale correction attained by the method described above.

The organic fiber 231 contains, for example, at least one organic material selected from the group consisting of polyamideimide, polyamide, polyolefin, polyether, polyimide, polyketone, polysulfone, cellulose, polyvinyl alcohol (PVA), and polyvinylidene fluoride (PVdF). Examples of polyolefin include polypropylene (PP) and polyethylene (PE). Polyimide and PVdF are generally considered to be materials which are hardly formed into a fibrous shape. Such materials can also form a layer in a fibrous shape when an electrospinning method to be described later is employed. The kind of organic fiber 231 can be one kind or two or more kinds. At least one kind selected from the group consisting of polyimide, polyamideimide, cellulose, PVdF, and PVA is preferable and at least one kind selected from the group consisting of polyimide, polyamideimide, cellulose, and PVdF is more preferable.

In particular, polyimide is insoluble or unmeltable and also does not decompose even at 250 to 400°C and thus the deposit 23 exhibiting excellent heat resistance can be obtained.

The organic fiber 231 has a length of 1 mm or more and an average diameter of 2 um or less and more preferably has an average diameter of 1 um or less. Such a deposit 23 has sufficient strength, porosity, air permeability, pore diameter, resistance to electrolytic solution, resistance to oxidation and reduction, and the like and thus favorably functions as a separator. The average diameter of the organic fibers 231 can be measured through observation using a FIB apparatus. In addition, the length of the organic fiber 231 is attained based on the measurement through observation using a FIB apparatus.

It is required to secure the ion permeability and the property to be impregnated with electrolytic solution, and thus 30% or more of the volume of the entire fibers forming the deposit 23 is preferably the organic fiber 231 having an average diameter of 1 um or less, more preferably the organic fiber 231 having an average diameter of 350 nm or less, and still more preferably the organic fiber 231 having an average diameter of 50 nm or less.

In addition, it is more preferable that the volume of the organic fiber 231 having an average diameter of 1 um or less (more preferably 350 nm or less, and still more preferably 50 nm or less) in the organic fibers 231 occupies 80% or more of the volume of the entire fibers forming the deposit 23. Such a state can be confirmed through SIM observation of the deposit 23. It is more preferable that the organic fiber 231 having a thickness of 40 nm or less occupies 40% or more of the volume of the entire fibers forming the deposit 23. The influence of hindering the migration of ions is smaller as the diameter of the organic fiber 231 is smaller.

It is preferable that a cation exchange group is present on the surface of the organic fiber 231. The migration of ions such as lithium ions passing through the separator is promoted by the cation exchange group, and the performance of battery is thus enhanced. Specifically, rapid charge and rapid discharge can be performed over a long period of time. The cation exchange group is not particularly limited, and examples thereof include a sulfonic acid group and a carboxylic acid group. The fiber having a cation exchange group on the surface can be formed by an electrospinning method using, for example, a sulfonated organic material. The details of the electrospinning method will be described later.

It is preferable that the deposit 23 has pores and the average pore diameter of the pores is 5 nm or more and 10 um or less. In addition, the porosity is preferably 10% or more and 90% or less. A separator exhibiting excellent ion permeability and favorable property to be impregnated with electrolyte can be obtained when the deposit 23 has such pores. The porosity is more preferably 80% or more. The average pore diameter and porosity of the pores can be confirmed by a mercury intrusion method, calculation from volume and density, SEM observation, SIM observation, and a gas desorption and adsorption method. The porosity is desirably calculated from the volume and density of the deposit 23. In addition, it is desirable to measure the average pore diameter by a mercury intrusion method or a gas adsorption method. The influence of hindering the migration of ions is smaller as the porosity of the deposit 23 is greater.

The thickness of the deposit 23 is desirably in a range of 12 um or less. The lower limit value of the thickness is not particularly limited but may be 1 um.

In the deposit 23, the porosity can be increased if the organic fibers 231 included are in a sparse state and it is thus not difficult to obtain a layer having a porosity of, for example, about 90%. It is extremely difficult to form a layer having such a high porosity using particles.

The deposit 23 is more advantageous than a deposit of inorganic fiber in terms of irregularities, fragility, property to be impregnated with electrolytic solution, adhesive property, bending property, porosity, and ion permeability.

The deposit 23 may contain particles of an organic compound. These particles are formed of, for example, the same material as that for the organic fiber 231. These particles may be integrally formed with the organic fiber 231. In addition, the ratios V1/H1 and V2/H2 described above may be those attained for the cross section of these particles by the same method.

### (6) Electrolyte

A nonaqueous electrolyte can be used as the electrolyte. Examples of a nonaqueous electrolyte include a liquid nonaqueous electrolyte prepared by dissolving an electrolyte salt in an organic solvent and a gel nonaqueous electrolytes in which a liquid electrolyte and a polymer material are complexed. The liquid nonaqueous electrolyte can be prepared, for example, by dissolving an electrolyte salt in an organic solvent at a concentration of 0.5 mol/L or more and 2.5 mol/L or less.

Examples of the electrolyte salt include lithium salts such as lithium perchlorate (LiClO₄), lithium hexafluorophosphate (LiPF₆), lithium tetrafluoroborate (LiBF₄), lithium arsenic hexafluoride (LiAsF₆), lithium trifluoromethanesulfonate (LiCF₃SO₃), and lithium bis(trifluoromethylsulfonyl)imide [LiN(CF₃SO₂)₂], or any mixture of these. Those that are hardly oxidized even at a high potential are preferable, and LiPF₆ is most preferable.

Examples of the organic solvent include cyclic carbonates such as propylene carbonate (PC), ethylene carbonate (EC), and vinylene carbonate, and chain carbonates such as diethyl carbonate (DEC), dimethyl carbonate (DMC), and methyl ethyl carbonate (MEC), cyclic ethers such as tetrahydrofuran (THF), 2-methyltetrahydrofuran (2MeTHF), and dioxolane (DOX), chain ethers such as dimethoxyethane (DME) and dietoethane (DEE), γ-butyrolactone (GBL), acetonitrile (AN), and sulfolane (SL). These organic solvents may be used singly or as a mixture of two or more kinds thereof.

Examples of a polymer material include polyvinylidene fluoride (PVdF), polyacrylonitrile (PAN), polyethylene oxide (PEO), or any mixture of these.

Incidentally, as the nonaqueous electrolyte, a room temperature molten salt (ionic melt) which contains a lithium ion, a solid polymer electrolyte, an inorganic solid electrolyte, or the like may be used.

### (7) Exterior container

As the exterior member, for example, a metal container or a laminated film container can be used.

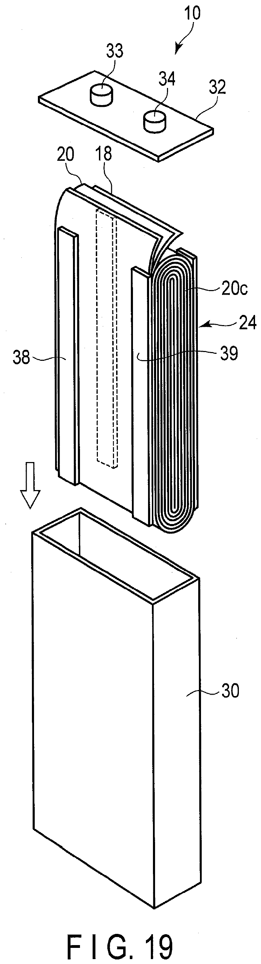

FIG. 19 is an exploded perspective view illustrating an example of a secondary battery according to an embodiment. FIG. 19 is a view illustrating an example of a secondary battery using a rectangular metal container as an exterior member. A secondary battery 10 illustrated in FIG. 19 includes an exterior member 30, a wound electrode group 24, a lid 32, a positive electrode terminal 33, a negative electrode terminal 34, and a nonaqueous electrolyte (not illustrated). The wound electrode group 24 has a structure in which the positive electrode 18, the separator 22, and the negative electrode 20 are wound in a flat spiral shape. In the wound electrode group 24, the positive electrode tab 18c wound in a flat spiral shape is located at one end face in the circumferential direction and the negative electrode tab 20c wound in a flat spiral shape is located at the other end face in the circumferential direction. The nonaqueous electrolyte (not illustrated) is held or impregnated in the electrode group 24. A positive electrode lead 38 is electrically connected to the positive electrode tab 18c and also electrically connected to the positive electrode terminal 33. In addition, a negative electrode lead 39 is electrically connected to the negative electrode tab 20c and also electrically connected to the negative electrode terminal 34. The electrode group 24 is disposed in the exterior member 30 so that the positive electrode lead 38 and the negative electrode lead 39 face the main surface side of the exterior member 30. The lid 32 is fixed to the opening of the exterior member 30 by welding and the like. The positive electrode terminal 33 and the negative electrode terminal 34 are respectively attached to the lid 32 with an insulating hermetic seal member (not illustrated) interposed therebetween.

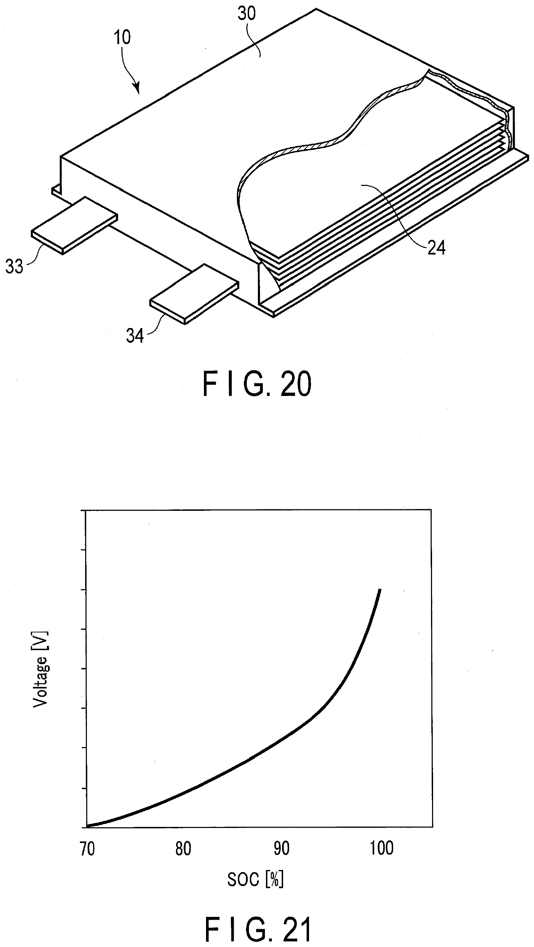

FIG. 20 is a partial notch perspective view illustrating another example of the secondary battery according to an embodiment. FIG. 20 is a view illustrating an example of a secondary battery using a laminated film as an exterior member. A secondary battery 10 illustrated in FIG. 20 includes a laminated film exterior member 30, an electrode group 24, a positive electrode terminal 33, a negative electrode terminal 34, and a nonaqueous electrolyte (not illustrated). The electrode group 24 has a stacked structure in which the positive electrode 18 and the negative electrode 20 are alternately stacked with the separator 22 interposed therebetween. The nonaqueous electrolyte (not illustrated) is held or impregnated in the electrode group 24. The positive electrode tab 18c of each positive electrode 18 is electrically connected to the positive electrode terminal 33, and the negative electrode tab 20c of each negative electrode 20 is electrically connected to the negative electrode terminal 34. As illustrated in FIG. 20, the tip of each of the positive electrode terminal 33 and the negative electrode terminal 34 protrudes to the outside of the exterior member 30 in a state in which the positive electrode terminal 33 and the negative electrode terminal 34 are at a distance from each other.

Next, an example of a method of manufacturing a secondary battery according to an embodiment will be described.

First, a slurry containing a negative electrode active material, a conductive agent, and a binder is prepared, the slurry obtained is applied onto both surfaces of the negative electrode current collector 20a and dried to form the negative electrode active material-containing layer 20b, pressing is performed, and the resultant is then cut into desired dimensions if necessary. In addition, with regard to the negative electrode tab 20c, a part of the negative electrode current collector 20a is not coated with the slurry but this part is used as the negative electrode tab 20c. The negative electrode 20 is obtained as described above. In addition, the positive electrode 18 is obtained by the same method as that for the negative electrode 20.

Next, the deposit 23 is formed on the negative electrode active material-containing layer 20b by, for example, an electrospinning method. In the electrospinning method, the negative electrode 20, which is the target of the deposit 23 formation, is grounded to form an earth electrode. The raw material solution is electrified by the voltage applied to the spinning nozzle and the electric charge amount per unit volume of the raw material solution is increased by the volatilization of the solvent from the raw material solution. As the volatilization of the solvent and an increase in the electric charge amount per unit volume accompanying this continuously occur, the raw material solution ejected from the spinning nozzle extends in the longitudinal direction and is deposited on the negative electrode 20 as a nano-sized organic fiber 231. Coulomb force is generated between the organic fiber 231 and the negative electrode 20 by the potential difference between the nozzle and the negative electrode 20. Hence, it is possible to increase the contact area with the negative electrode 20 by the nano-sized organic fiber 231, to deposit this organic fiber 231 on the negative electrode 20, particularly on the negative electrode current collector 20a and the negative electrode tab 20c by the Coulomb force, and thus to increase the peel strength of the deposit 23 from the negative electrode 20. The peel strength can be controlled by, for example, adjusting the solution concentration, the sample-nozzle distance and the like. Incidentally, in a case where the deposit 23 is not formed on the tab, it is preferable that the deposit 23 is formed after the tab is masked.

The deposit 23 can be easily formed on the electrode surface by the electrospinning method. By the electrospinning method, one continuous fiber is formed in principle, resistance to fracture due to bending and film cracking can be secured with a thin film. The fact that the organic fiber 231 constituting the deposit 23 is one string provides a low probability of fraying or partial loss of the deposit 23 and is advantageous in terms of suppression of self-discharge.

In electrospinning, a solution prepared by dissolving an organic material in a solvent is used as a raw material solution. Examples of the organic material include the same ones as those exemplified in the organic material constituting the organic fiber 231. The organic material is used, for example, by being dissolved in a solvent at a concentration of about 5% to 60% by mass. The solvent in which the organic material is dissolved is not particularly limited, and an arbitrary solvent such as dimethylacetamide (DMAc), dimethylsulfoxide (DMSO), N,N'-dimethylformamide (DMF), N-methylpyrrolidone (NMP), water, and alcohols can be used. In addition, with regard to an organic material exhibiting low solubility, electrospinning is performed while melting the sheet-shaped organic material using a laser and the like. In addition, it is also acceptable to mix an organic solvent having a high boiling point with a solvent having a low melting point.

Here, the aspect ratio of the organic fiber 231 can be adjusted by appropriately adjusting the kinds of the solvent and organic material to be contained in the raw material solution.

The deposit 23 is formed by ejecting the raw material solution from the spinning nozzle over the surface of a predetermined electrode while applying a voltage to the spinning nozzle using a high-voltage generator. The applied voltage is appropriately determined according to the solvent and solute species, boiling point and vapor pressure curves of the solvent, solution concentration, temperature, nozzle shape, sample-nozzle distance and the like. For example, the potential difference between the nozzle and the work can be set to 0.1 to 100 kV. The supply rate of the raw material solution is also appropriately determined according to the solution concentration, solution viscosity, temperature, pressure, applied voltage, nozzle shape and the like. In the case of a syringe type, for example, the supply rate can be set to about 0.1 to 500 µl/min per one nozzle. In addition, in the case of multiple nozzles or slits, the supply rate may be determined according to the opening area thereof.

The organic fiber 231 is formed directly on the surface of the electrode in a dry state, and thus permeation of the solvent of the raw material solution into the electrode is substantially avoided. The residual amount of solvent inside the electrode is equal to or less than a ppm level to be extremely low. The residual solvent inside the electrode causes a redox reaction, battery loss, and thus a decrease in battery performance. According to the present embodiment, the performance of battery can be enhanced since the risk that such troubles are caused is diminished to the utmost.

Next, a stacked body of the negative electrode 20 and the deposit 23 thus formed is pressed. The pressing method may be roll pressing or flat plate pressing. The temperature for this pressing is set to, for example, 20°C. In addition, it is preferable to perform this pressing so that the ratio t1/t0 of the thickness t1 of the stacked body after pressing to the thickness t0 of the stacked body before pressing, namely, the compression ratio is in a range of 70% or more and 98% or less. Incidentally, pressing of this stacked body may be omitted.

Next, the positive electrode 18 is stacked on the deposit 23 of the stacked body after pressing to form the electrode group 24. Subsequently, this electrode group 24 is wound into a flat spiral shape to obtain a wound electrode group. Subsequently, this wound electrode group is pressed. Incidentally, pressing of this wound electrode group may be omitted.

Subsequently, the wound electrode group thus obtained and the nonaqueous electrolyte are enclosed in an exterior container. The secondary battery illustrated in FIG. 19 can be thus obtained.

In the secondary battery including such a flat wound electrode group, the deposit 23 peels off at the curved portion by pressing of the wound electrode group in some cases. As described above, the separator 22 included in this secondary battery is in contact with the active material-containing layer and includes the deposit 23 of the organic fiber 231 of which the cross section has an aspect ratio of 0.97 or less. Such a deposit 23 exhibits high adhesive property to the active material-containing layer and is less likely to peel off from the active material-containing layer. Hence, when such a deposit 23 is used as a separator, the deposit 23 is less likely to peel off from the active material-containing layer even at the curved portion of the wound electrode group as compared with a case of using the deposit 23 of the organic fiber 231 of which the cross section has an aspect ratio of 1.00 as a separator. For this reason, the deposit 23 including such an organic fiber 231 can be suitably used as a separator for wound electrode group.

Incidentally, a stacked electrode group may be used in the secondary battery according to an embodiment as illustrated in FIG. 20. The stacked electrode group can be obtained by stacking a plurality of positive electrodes and negative electrodes with a separator interposed therebetween.

### [Second embodiment]

An electrode structure according to a second embodiment includes an electrode and a separator including an organic fiber layer. The electrode includes a current collector and an active material-containing layer supported on at least one surface of the current collector. A surface of the active material-containing layer comprises a first region having a roughness higher than an arithmetic mean surface roughness Ra of the active material-containing layer and a second region having a roughness of ≤ the arithmetic mean surface roughness Ra of the active material-containing layer. The active material-containing layer is a negative electrode active material-containing layer or a positive active material-containing layer. The arithmetic mean surface roughness Ra of the negative active material-containing layer is in a range of 0.01 um or more and 0.5 um or less and the arithmetic mean surface roughness Ra of the positive active material-containing layer is in a range of 0.01 um or more and 1 um or less as attained by a method prescribed in Japanese Industrial Standard JIS B 0601: 2013. The separator includes an organic fiber layer. The organic fiber layer includes an organic fiber having an aspect ratio (V1/H1) in a cross section intersecting with the length direction of the organic fiber of ≤ 0.97, wherein V1 is the length parallel to the thickness direction of the active material-containing layer, and H1 is the length horizontal to an in-plane direction thereof, and being in contact with the first region in the cross section. The organic fiber layer also includes an organic fiber having an aspect ratio (V2/H2) of ≥ the aspect ratio (V1/H1) in a cross section intersecting with the length direction of the organic fiber, wherein V2 is the length parallel to the thickness direction of the active material-containing layer, and H2 is the length horizontal to an in-plane direction thereof, and being in contact with the second region in the cross section. The organic fiber having the aspect ratio (V1/H1) and the organic fiber having the aspect ratio (V2/H2) are one organic fiber or separate organic fibers. The organic fiber has a length of 1 mm or more and an average diameter of 2 um or less as measured through observation using a FIB apparatus. The aspect ratios V1/H1 and V2/H2 are obtained as described herein.

The electrode included in the electrode structure according to the second embodiment may be a positive electrode, may be a negative electrode, or may be a positive electrode and a negative electrode. In other words, the electrode structure according to the second embodiment may include a positive electrode and a separator including an organic fiber layer, may include a negative electrode and a separator including an organic fiber layer, or may include a positive electrode, a negative electrode, and a separator including an organic fiber layer. In this case, the organic fiber layer may be in contact with the surface of either the positive electrode or the negative electrode or in contact with the surfaces of both the positive electrode and the negative electrode. As the positive electrode, the negative electrode, and the separator, the same ones as those described in the first embodiment are used.

In addition, the organic fiber layer may include an organic fiber of which the cross section intersecting with the length direction of the organic fiber has an aspect ratio (V2/H2) lower than the aspect ratio (V1/H1) and which is in contact with the surface of the active material-containing layer having a roughness equal to or less than the arithmetic mean surface roughness Ra of the active material-containing layer in the cross section. Here, V2 denotes the length parallel to the thickness direction of the active material-containing layer and H2 denotes the length horizontal to the in-plane direction of the active material-containing layer. When a separator employing such a configuration is used, the cycle characteristics can be enhanced as well as the short circuit of the secondary battery is suppressed.

### Examples

### (Example 1)

As a negative electrode, an electrode was prepared in which a negative electrode active material-containing layer containing lithium titanate having a spinel structure was provided on both surfaces of a current collector formed of an aluminum foil. The average particle diameter of primary particles of lithium titanate was 0.5 um. In addition, the negative electrode active material-containing layer was not formed at one end portion in the long side direction of the current collector, but this portion was used as a negative electrode tab.

A deposit of organic fiber was formed on this negative electrode by an electrospinning method.

Polyimide was used as an organic material. This polyimide was dissolved in DMAc as a solvent at a concentration of 20% by mass to prepare a raw material solution for forming a deposit of organic fiber. The raw material solution obtained was supplied from the spinning nozzle to the surface of the negative electrode at a supply rate of 5 µl/min using a metering pump. A voltage of 20 kV was applied to the spinning nozzle using a high-voltage generator, and an organic fiber layer was formed on the negative electrode surface while moving one spinning nozzle in a range of 100 × 200 mm. Incidentally, the electrospinning method was performed in a state in which the surface of the negative electrode current collection tab was masked except the portion in 10 mm from the boundary with the negative electrode side surface in the surface of the negative electrode current collection tab to obtain a stacked body of the negative electrode and the deposit having the structure illustrated in FIG. 9.

Subsequently, this negative electrode stacked body was pressed using a roll press. The pressing temperature was 20°C. The pressing pressure was set so that the compression ratio t1/t0 was 98%.

Next, a secondary battery was fabricated using the negative electrode structure, and the battery performance was evaluated.

As a positive electrode, an electrode was prepared in which a positive electrode active material-containing layer containing lithium cobaltate was provided on a current collector formed of an aluminum foil.

The positive electrode was disposed on the stacked body of the negative electrode and the deposit so that the positive electrode active material-containing layer faced the negative electrode active material-containing layer with the deposit interposed therebetween, and these were wound into a flat shape to obtain an electrode group having a flat spiral shape. The electrode group was vacuum-dried at room temperature for one night and then left to stand in a glove box having a dew point of -80°C or less for one day.

This was housed in a metal container together with an electrolytic solution, whereby a nonaqueous electrolyte battery of Example 1 was obtained. The electrolytic solution used was one in which LiPF₆ was dissolved in ethylene carbonate (EC) and dimethyl carbonate (DMC).

The arithmetic mean surface roughness Ra of the active material-containing layer of this secondary battery was calculated by the method described above, and the value was 0.2 um. In addition, the aspect ratio V1/H1 of the cross section of the organic fiber in contact with the surface of the active material-containing layer in the first region was measured. As a result, the ratio V1/H1 was 0.97. Incidentally, the distance D1 between the center line and the point closest to the center line among the contact points between the contour of the cross section of this organic fiber and the active material-containing layer was 1 um. In addition, the aspect ratio V2/H2 of the organic fiber in contact with the surface of the active material-containing layer in the second region was 1.00. Incidentally, the distance D2 between the center line and the point which is located in a region lower than the centerline and is farthest from the centerline among the contact points between the contour of the cross section of this organic fiber and the active material-containing layer was 0.1 um

### (Example 2)

A secondary battery was fabricated by the same method as that described in Example 1 except that the compression ratio was changed from 98% to 93%.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer in the first region was measured. As a result, the ratio V1/H1 was 0.76. Incidentally, the distance D1 was 0.5 um. In addition, the aspect ratio V2/H2 of the organic fiber in contact with the surface of the active material-containing layer in the second region was 0.99. Incidentally, the distance D2 was 0.1 um.

### (Example 3)

A secondary battery was fabricated by the same method as that described in Example 1 except that the compression ratio was changed from 98% to 76%.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer having the arithmetic mean surface roughness Ra was measured. As a result, the ratio V1/H1 was 0.53. Incidentally, the distance D1 was 2 um.

### (Example 4)

A secondary battery was fabricated by the same method as that described in Example 1 except that the organic material was changed from polyimide to polyamideimide and the compression ratio was changed from 98% to 93%.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer in the first region was measured. Incidentally, the distance D1 was 1 µm. As a result, the ratio V1/H1 was 0.3.

### (Example 5)

A secondary battery was fabricated by the same method as that described in Example 4 except that the solvent of the raw material solution used in the electrospinning method was changed from DMAc to NMP and pressing of the stacked body of the negative electrode and the deposit was omitted.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer in the first region was measured. As a result, the ratio V1/H1 was 0.2. Incidentally, the distance D1 was 1 um.

### (Example 6)

A secondary battery was fabricated by the same method as that described in Example 1 except that the electrode group was pressed at a pressing temperature of 80°C.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer in the first region was measured. As a result, the ratio V1/H1 was 0.96. Incidentally, the distance D1 was 1 um. In addition, the aspect ratio V2/H2 of the organic fiber in contact with the surface of the active material-containing layer in the second region was 1.00. Incidentally, the distance D2 was 0.1 um.

### (Comparative Example 1)

A secondary battery was fabricated by the same method as that described in Example 1 except that pressing of the stacked body of the negative electrode and the deposit was omitted.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer in the first region was measured. As a result, the ratio V1/H1 was 0.98. Incidentally, the distance D1 was 1 um. In addition, the aspect ratio V2/H2 of the organic fiber in contact with the surface of the active material-containing layer in the second region was 1.00. Incidentally, the distance D2 was 0.1 um.

### <Performance evaluation>

### (Measurement of average diameter of organic fiber)

The organic fiber layers taken out from the batteries according to Examples 1 to 6 and Comparative Example 1 were observed using a FIB apparatus, and the average diameter of organic fibers was measured. The results are presented in Table 1.

### (Visual evaluation)

The batteries according to Examples 1 to 6 and Comparative Example 1 were disassembled to take out the electrode group therefrom, and it was visually confirmed whether there was a portion at which the deposit of organic fiber peeled off from the active material-containing layer. It was judged as "double circle" in a case where peeling off of the deposit of organic fiber was not observed at all, as "o" in a case where peeling of the deposit of organic fiber was almost not observed, and as "×" in a case where exposure of the electrode was observed at the portion at which the deposit of organic fiber peeled off.

This result is presented in Table 1.

### (Characteristic evaluation)

The charge and discharge curves were attained for the batteries of which the result of the visual evaluation was "double circle", "o", or "△" according to Examples 1 to 6. Specifically, the battery was charged at a rate of 1 C until the SOC of battery reached 100% to attain a charge curve. In addition, the battery after charge was discharged at a rate of 1 C until the SOC of battery became 0% to attain a discharge curve. Incidentally, the temperature at the time of charge and discharge was set to 25°C. It was judged as "o" in a case where the charge and discharge curves were attained without interruption and as "×" in a case where the charge and discharge curves were not attained because of being interrupted. This result is presented in Table 1.

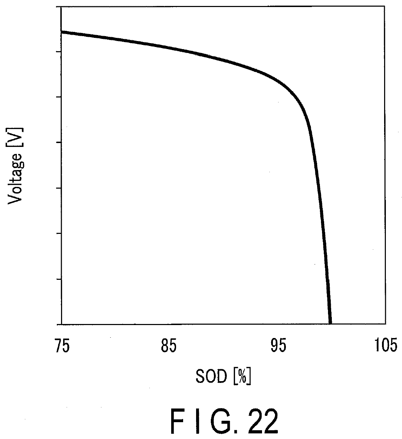

FIG. 21 is a graph illustrating a charge curve attained for the battery according to Example 1. FIG. 22 is a graph illustrating a discharge curve attained for the battery according to Example 1. In FIGS. 21 and 22, the horizontal axis represents the state of charge (SOC) or the state of discharge (SOD) and the vertical axis represents the battery voltage.

As apparent from FIG. 21, the battery of Example 1 reached a predetermined battery voltage at 100% SOC. In addition, as apparent from FIG. 22, favorable discharge characteristics were attained in the battery of Example 1 as the battery voltage gradually dropped from SOD 75% to SOD 95%.

**[Table 1]**

| Table 1 | | | | | | | |
|---|---|---|---|---|---|---|---|
| | Manufacturing conditions | | Organic fiber | | | Battery performance evaluation | |
| | Compression ratio (%) | Electrode group pressing | Organic material | ratio V1/H1 | Fiber diameter (µm) | Visual evaluation | Characteristic evaluation |
| Example 1 | 98 | Absent | Polyimide | 0.97 | 0.6 | ○ | ○ |
| Example 2 | 93 | Absent | Polyimide | 0.76 | 0.6 | ⊚ | ○ |
| Example 3 | 76 | Absent | Polyimide | 0.53 | 0.6 | ⊚ | ○ |
| Example 4 | 93 | Absent | Polyamideimide | 0.3 | 1.5 | ○ | ○ |
| Example 5 | - | Absent | Polyamideimide | 0.2 | 2 | ○ | ○ |
| Example 6 | 98 | Present | Polyimide | 0.96 | 0.6 | ○ | ○ |
| Comparable Example 1 | - | Absent | Polyimide | 0.98 | 0.6 | × | - |

In Table 1 above, the compression ratio of the stacked body of the negative electrode and the deposit is described in the row written as the "compression ratio (%)" among the lower rows of the heading "manufacturing conditions". The presence or absence of pressing of the electrode group is described in the row written as the "electrode group pressing".

In Table 1 above, the kinds of raw materials of organic fiber is described in the row written as the "organic material" among the lower rows of the heading "organic fiber". The aspect ratio V1/H1 of the organic fiber present in a region higher than the arithmetic mean surface roughness Ra of the active material-containing layer attained by the method described above is described in the row written as the "ratio V1/H1". The average diameter of organic fibers is described in the row written as the "fiber diameter (um)".

In Table 1 above, the results of the visual evaluation described above are described in the row written as the "visual evaluation" among the lower rows of the heading "battery performance evaluation". The results for the charge and discharge curves described above are described in the row written as the "characteristic evaluation".

As presented in Table 1, the organic fiber layers in which the ratio V1/H1 is 0.97 or less according to Examples 1 to 6 were less likely to peel off from the active material-containing layer than the organic fiber layer in which the ratio V1/H1 is greater than 0.97 according to Comparative Example 1. Hence, it is considered that the batteries according to Examples 1 to 6 are less likely to cause a short circuit between the positive electrode and the negative electrode than the battery according to Comparative Example 1.

In addition, the organic fiber layers in which the ratio V1/H1 is 0.76 or less according to Examples 2 to 4 were even less likely to peel from the active material-content layer.

In addition, as can be seen from the comparison between Example 1 and Example 6, the aspect ratio of the organic fiber was hardly changed even when the electrode group is pressed.

In addition, as presented in Table 1, excellent battery characteristics could be attained in a case where the kind of raw material of organic fiber is changed as well.

### (Example 7) (not in accordance with the present invention)

First, the same negative electrode as that described in Example 1 was prepared.

Subsequently, a slurry was prepared by dispersing 100 parts by mass of Al₂O₃ particles having an average particle diameter of 1 um as an inorganic material, 1 part by mass of carboxymethylcellulose (CMC), and 4 parts by mass of an acrylic binder in water.

Subsequently, this slurry was applied over the entire main surface of the negative electrode active material-containing layer. Subsequently, the negative electrode coated with the slurry was dried to obtain a stacked body of an intermediate layer and the negative electrode.

Subsequently, a deposit of organic fiber was formed on the main surface of the intermediate layer by the same method as that described in Example 1. A negative electrode structure was thus obtained in which the negative electrode active material-containing layer, the intermediate layer, and the organic fiber layer were stacked on the negative electrode current collector in this order.

Subsequently, this negative electrode structure was pressed using a roll press. The pressing temperature was 20°C. The pressing pressure was set so that the compression ratio t1/t0 was 76%.

A secondary battery was fabricated by the same method as that described in Example 1 except that this negative electrode structure was used.

The arithmetic mean surface roughness Ra of the insulating intermediate layer of this secondary battery was calculated by the method described above, and the value was 0.3 um. In addition, the aspect ratio V1/H1 of the organic fiber in contact with the surface of the intermediate layer in the first region was measured. As a result, the ratio V1/H1 was 0.68. Incidentally, the distance D1 was 1 um. In addition, the aspect ratio V2/H2 of the organic fiber in contact with the surface of the active material-containing layer in the second region was 1.00. Incidentally, the distance D2 was 0.1 um.

### (Example 8)

A secondary battery was fabricated by the same method as that described in Example 1 except that the organic material was changed from polyimide to polyamide and the compression ratio was changed from 98% to 76%.

The arithmetic mean surface roughness Ra of the active material-containing layer of this secondary battery was calculated by the method described above, and the value was 0.2 um. In addition, the aspect ratio V1/H1 of the organic fiber in contact with the surface of the active material-containing layer in the first region was measured. As a result, the ratio V1/H1 was 0.53. Incidentally, the distance D1 was 1 um. In addition, the aspect ratio V2/H2 of the organic fiber in contact with the surface of the active material-containing layer in the second region was 1.00. Incidentally, the distance D2 was 0.1 um.

### <Performance evaluation>

For the batteries according to Example 7 and 8, the measurement of average diameter of the organic fiber, visual evaluation, and characteristic evaluation were performed by the methods described above. The results are presented in Table 2.

**[Table 2]**

| Table 2 | | | | | | | | |
|---|---|---|---|---|---|---|---|---|
| | Intermediate layer | Manufacturing conditions | | Organic fiber | | | Battery performance evaluation | |
| | | Compression ratio (%) | Electrode group pressing | Organic material | ratio V1/H1 | Fiber diameter (µm) | Visual evaluation | Characteristic evaluation |
| Example 7 | Present | 76 | Absent | Polyimide | 0.68 | 0.6 | ○ | ○ |
| Example 8 | Absent | 76 | Absent | Polyamide | 0.53 | 1.1 | ○ | ○ |

In Table 2 above, the presence or absence of the intermediate layer on the active material-containing layer is described in the row written as the "intermediate layer". For the items other than this, the same contents as those in Table 1 are described.

According to at least one embodiment described above, the organic fiber of which the cross section intersecting with the length direction of the organic fiber has an aspect ratio (V1/H1) of 0.97 or less is in contact with the electrode surface, and thus the layer including this organic fiber is less likely to peel off from the electrode even if the organic fiber is subjected to vibration or an external impact. Hence, it is possible to diminish the occurrence of short circuit between the positive electrode and the negative electrode when a layer including this organic fiber is used as a separator.

In Table 2 above, the presence or absence of the intermediate layer on the active material-containing layer is described in the row written as the "intermediate layer". For the items other than this, the same contents as those in Table 1 are described.

According to at least one embodiment described above, the organic fiber of which the cross section intersecting with the length direction of the organic fiber has an aspect ratio (V1/H1) of 0.97 or less is in contact with the electrode surface, and thus the layer including this organic fiber is less likely to peel off from the electrode even if the organic fiber is subjected to vibration or an external impact. Hence, it is possible to diminish the occurrence of short circuit between the positive electrode and the negative electrode when a layer including this organic fiber is used as a separator.

## Claims

1. An electrode structure comprising:
(i) an electrode including a current collector and an active material-containing layer supported on at least one surface of the current collector,
a surface of the active material-containing layer comprising:
- a first region having a roughness higher than an arithmetic mean surface roughness Ra of the active material-containing layer; and
- a second region having a roughness of ≤ the arithmetic mean surface roughness Ra of the active material-containing layer,
the active material-containing layer being a negative electrode active material-containing layer or a positive active material-containing layer, and
the arithmetic mean surface roughness Ra of the negative active material-containing layer being in a range of 0.01 um or more and 0.5 um or less and the arithmetic mean surface roughness Ra of the positive active material-containing layer being in a range of 0.01 um or more and 1 um or less as attained by a method prescribed in Japanese Industrial Standard JIS B 0601: 2013; and
(ii) a separator including an organic fiber layer comprising:
an organic fiber which
- has an aspect ratio (V1/H1) in a cross section intersecting with the length direction of the organic fiber of ≤ 0.97, wherein V1 is the length parallel to the thickness direction of the active material-containing layer, and H1 is the length horizontal to an in-plane direction thereof, and
- is in contact with the first region in the cross section; and
an organic fiber which
- has an aspect ratio (V2/H2) of ≥ the aspect ratio (V1/H1) in a cross section intersecting with the length direction of the organic fiber, wherein V2 is the length parallel to the thickness direction of the active material-containing layer, and H2 is the length horizontal to an in-plane direction thereof, and
- is in contact with the second region in the cross section,
the aspect ratio (V1/H1) and the aspect ratio (V2/H2) being obtained from a SIM image as prepared in accordance with the description ,
the organic fiber having the aspect ratio (V1/H1) and the organic fiber having the aspect ratio (V2/H2) being one organic fiber or separate organic fibers, and
the organic fiber having a length of 1 mm or more and an average diameter of 2 um or less as measured through observation using a FIB apparatus.

2. The electrode structure of claim 1, wherein the aspect ratio (V2/H2) is ≤ 1.

3. The electrode structure of claim 1 or 2, wherein the organic fiber layer contains at least one organic material selected from polyamideimide, polyamide, polyolefin, polyether, polyimide, polyketone, polysulfone, cellulose, polyvinyl alcohol and polyvinylidene fluoride.

4. The electrode structure of any of claims 1-3, wherein the aspect ratio (V1/H1) is 0.2-0.97.

5. The electrode structure of any one of claims 1-4, wherein the organic fiber layer has pores and an average pore diameter of the pores is 5 nm or more and 10 um or less, according to a mercury intrusion method, calculation from volume and density, SEM observation, SIM observation, or a gas desorption and adsorption method.

6. A secondary battery comprising a positive electrode and a negative electrode, wherein at least one of the positive electrode and the negative electrode comprises the electrode structure according to any one of claims 1-5.

## Patentansprüche

1. Elektrodenstruktur, umfassend:
(i) eine Elektrode, die einen Stromkollektor und eine aktivmaterialhaltige Schicht einschließt, die auf mindestens einer Oberfläche des Stromkollektors getragen wird, wobei eine Oberfläche der aktivmaterialhaltigen Schicht umfasst:
- einen ersten Bereich mit einer Rauheit, die höher als ein arithmetischer Mittenoberflächenrauwert Ra der aktivmaterialhaltigen Schicht ist, und
- einen zweiten Bereich mit einer Rauheit von ≤ des arithmetischen Mitteloberflächenrauwerts Ra der aktivmaterialhaltigen Schicht,
wobei die aktivmaterialhaltige Schicht eine ein Aktivmaterial einer negativen Elektrode enthaltende Schicht oder eine ein positives Aktivmaterial enthaltende Schicht ist und
der arithmetische Mittenoberflächenrauwert Ra der ein negatives Aktivmaterial enthaltenden Schicht in einem Bereich von 0,01 µm oder mehr und 0,5 µm oder weniger liegt und der arithmetische Mittenoberflächenrauwert Ra der ein positives Aktivmaterial enthaltenden Schicht in einem Bereich von 0,01 µm oder mehr und 1 µm oder weniger liegt, erhalten durch das im japanischen Industriestandard JIS B 0601: 2013 vorgeschriebene Verfahren, und
(ii) einen Separator einschließlich einer organischen Faserschicht, umfassend:
eine organische Faser, die
- ein Seitenverhältnis (V1/H1) in einem Querschnitt, der die Längenrichtung der organischen Faser schneidet, von ≤ 0,97 aufweist, wobei V1 die Länge parallel zur Dickenrichtung der aktivmaterialhaltigen Schicht ist und H1 die Länge horizontal zu einer Richtung in der Ebene davon ist, und
- in Kontakt mit dem ersten Bereich in dem Querschnitt ist, und
eine organische Faser, die
- ein Seitenverhältnis (V2/H2) von ≥ dem Seitenverhältnis (V1/H1) in einem Querschnitt, der die Längsrichtung der organischen Faser schneidet, aufweist, wobei V2 die Länge parallel zur Dickenrichtung der aktivmaterialhaltigen Schicht ist und H2 die Länge horizontal zu einer Richtung in der Ebene davon ist, und
- in Kontakt mit dem zweiten Bereich in dem Querschnitt ist,
wobei das Seitenverhältnis (V1/H1) und das Seitenverhältnis (V2/H2) aus einem gemäß der Beschreibung hergestellten SIM-Bild erhalten wird, wobei die organische Faser mit dem Seitenverhältnis (V1/H1) und die organische Faser mit dem Seitenverhältnis (V2/H2) eine organische Faser oder separate organische Fasern sind und
die organische Faser eine Länge von 1 mm oder mehr und einen durchschnittlichen Durchmesser von 2 µm oder weniger, gemessen durch Betrachtung unter Verwendung einer FIB-Vorrichtung, aufweist.

2. Elektrodenstruktur nach Anspruch 1, wobei das Seitenverhältnis (V2/H2) ≤ 1 ist.

3. Elektrodenstruktur nach Anspruch 1 oder 2, wobei die organische Faserschicht mindestens ein organisches Material, ausgewählt aus Polyamidimid, Polyamid, Polyolefin, Polyether, Polyimid, Polyketon, Polysulfon, Cellulose, Polyvinylalkohol und Polyvinylidenfluorid, enthält.

4. Elektrodenstruktur nach einem der Ansprüche 1-3, wobei das Seitenverhältnis (V1/H1) 0,2-0,97 beträgt.

5. Elektrodenstruktur nach einem der Ansprüche 1-4, wobei die organische Faserschicht Poren aufweist und ein durchschnittlicher Porendurchmesser der Poren 5 nm oder mehr und 10 µm oder weniger gemäß einem Quecksilberintrusionsverfahren, einer Berechnung aus Volumen und Dichte, einer REM-Betrachtung, einer SIM-Betrachtung oder einem Gasdesorptions- und -adsorptionsverfahren beträgt.

6. Sekundärbatterie, umfassend eine positive Elektrode und eine negative Elektrode, wobei mindestens eine von der positiven Elektrode und der negativen Elektrode die Elektrodenstruktur gemäß einem der Ansprüche 1-5 umfasst.

## Revendications

1. Structure d'électrode comprenant :
(i) une électrode incluant un collecteur de courant et une couche contenant un matériau actif supportée sur au moins une surface du collecteur de courant, une surface de la couche contenant un matériau actif comprenant :
- une première région présentant une rugosité supérieure à une rugosité de surface moyenne arithmétique Ra de la couche contenant un matériau actif ; et
- une deuxième région présentant une rugosité ≤ à la rugosité de surface moyenne arithmétique Ra de la couche contenant un matériau actif,
la couche contenant un matériau actif étant une couche contenant un matériau actif d'électrode négative ou une couche contenant un matériau actif positif, et
la rugosité de surface moyenne arithmétique Ra de la couche contenant un matériau actif négatif étant dans une plage de 0,01 µm ou plus à 0,5 µm ou moins et la rugosité de surface moyenne arithmétique Ra de la couche contenant un matériau actif positif étant dans une plage de 0,01 µm ou plus à 1 µm ou moins, obtenues par un procédé prescrit dans la norme industrielle japonaise JIS B 0601: 2013 ; et
(ii) un séparateur incluant une couche de fibres organiques comprenant une fibre organique qui
- présente un rapport d'aspect (V1/H1) dans une section transversale coupant la direction de la longueur de la fibre organique ≤ 0,97, dans laquelle V1 est la longueur parallèle à la direction de l'épaisseur de la couche contenant un matériau actif, et H1 est la longueur horizontale à une direction dans le plan de celle-ci, et
- est en contact avec la première région dans la section transversale ; et
une fibre organique qui
- présente un rapport d'aspect (V2/H2) >_ au rapport d'aspect (V1/H1) dans une section transversale coupant la direction de la longueur de la fibre organique, dans laquelle V2 est la longueur parallèle à la direction de l'épaisseur de la couche contenant un matériau actif, et H2 est la longueur horizontale à une direction dans le plan de celle-ci, et
- est en contact avec la deuxième région dans la section transversale, le rapport d'aspect (V1/H1) et le rapport d'aspect (V2/H2) étant obtenus à partir d'une image SIM préparée conformément à la description,
la fibre organique présentant le rapport d'aspect (V1/H1) et la fibre organique présentant le rapport d'aspect (V2/H2) étant une fibre organique ou des fibres organiques séparées, et
la fibre organique présentant une longueur de 1 mm ou plus et un diamètre moyen de 2 µm ou moins mesurés par observation en utilisant un appareil FIB.

2. Structure d'électrode selon la revendication 1, dans laquelle le rapport d'aspect (V2/H2) est ≤ 1.

3. Structure d'électrode selon la revendication 1 ou la revendication 2, dans laquelle la couche de fibres organiques contient au moins un matériau organique sélectionné parmi le polyamideimide, le polyamide, la polyoléfine, le polyéther, le polyimide, le polycétone, le polysulfone, la cellulose, l'alcool polyvinylique et le fluorure de polyvinylidène.

4. Structure d'électrode selon l'une quelconque des revendications 1 à 3, dans laquelle le rapport d'aspect (V1/H1) est 0,2-0,97.

5. Structure d'électrode selon l'une quelconque des revendications 1 à 4, dans laquelle la couche de fibres organiques présente des pores et un diamètre de pore moyen des pores est de 5 nm ou plus et de 10 µm ou moins, selon un procédé d'intrusion de mercure, un calcul à partir du volume et de la densité, une observation MEB, une observation MCI ou un procédé de désorption et d'adsorption de gaz.

6. Batterie rechargeable comprenant une électrode positive et une électrode négative, dans laquelle au moins une de l'électrode positive et de l'électrode négative comprend la structure d'électrode selon l'une quelconque des revendications 1 à 5.
